# EUROPEAN PATENT SPECIFICATION

(11) **EP 2 407 983 B1**
(45) Date of publication and mention of the grant of the patent: **01.02.2017**
(21) Application number: 10169572.4
(22) Date of filing: 14.07.2010
(51) Int. Cl.: H01G 11/10, H01G 11/74, H01G 4/38, H01G 11/76

(54) **Method for packaging and connecting ultracapacitors for energy storage purposes**
Verfahren zum Verpacken und Verbinden von Ultrakondensatoren für Energiespeicherzwecke
Procédé de conditionnement et de connexion de supercondensateurs à des fins de stockage d'énergie

(43) Date of publication of application: 18.01.2012
(73) Proprietor: VITO NV, 2400 Mol (BE)
(72) Inventor: Leemans, Filip, 2260 Westerlo (BE); De Smet, Johan, 3971 Heppen - Leopoldsburg (BE); Weyen, Dominique, 3920 Lommel (BE)
(74) Representative: IPLodge bvba

(56) References cited:
- EP-A1- 0 817 288
- DE-U1-202010 010 231
- FR-A1- 2 492 577
- US-A- 2 824 264
- US-A1- 2006 262 482
- US-A1- 2007 002 518
- US-A1- 2010 134 940

## Description

The present application relates to capacitor banks especially ultracapacitor banks, to electrical storage means including such a capacitor bank, and to vehicles including the electrical storage means as well as to methods of making and using capacitor banks especially ultracapacitor banks.

### Technical Background

Batteries are commonly used in a wide variety of applications, for example as an energy buffer in hybrid vehicles and standalone applications. The disadvantage of batteries is their short life expectancy and the low power density. One cause of such problems is the chemical reaction which lies at the heart of their mode of operation. These characteristics reduce performance and payback time in industrial and automotive applications. Ultracapacitors are low voltage capacitors with a high capacity. Their energy density is the major difference with a normal capacitor. Compared to batteries the power density and life expectancy of ultracapacitors is greatly improved. Typical numbers for these characteristics are one million cycles and a power density of 5900 W/kg for a capacity of 3000 Farad. The higher power density creates an ideal situation for absorbing peak power. The peaks that occur when braking or accelerating a hybrid vehicle will result in a lower life time for a battery, but will be an ideal application for ultracapacitors. For the vehicle this will result in a lower fuel consumption. Combination with a long life expectancy gives a better solution compared to batteries in some applications.
Whether the ultracapacitors are used on an automotive application or in an industrial environment, they always need an appropriate enclosure.

According to US2010/134940, it is known a coupling system for a plurality of ultracapacitor modules, comprising: a plurality of ultracapacitor modules, each module comprising a plurality of ultracapacitors in a housing, the ultracapacitor modules being adapted for pluggable connection with a connection module and for slidable insertion in a frame provided to keep the ultracapacitors modules and the connecting module mechanically together.

### Summary of the invention

The object of the present invention is to provide an ultracapacitor energy storage system and in particular a system for packaging and connecting ultracapacitors for energy storage purposes which is applicable in automotive and stationary applications. The ultracapacitors in the system can be in series or parallel or a combination of both. A controller, relays, voltage monitoring and isolation fault detection are used to regulate the system. The mechanical construction of frame and different pluggable modules lead to an easy in- and deinstallation of the different parts. The different constructions are designed with a safe handling by the operator in mind.

The present invention provides an assembly of ultracapacitor modules with a coupling system for the plurality of ultracapacitor modules, according to claim 1.

Preferably, each ultracapacitor module has a housing and a heat sink is provided on the housing with means for airflow over the heat sink. Optionally, an air-guiding plate is provided on the side of the heat sink remote from the housing. For example, the air-guiding plate can be adapted for sliding into the frame or is mounted onto an ultracapacitor module.

To obtain maximum voltage, the ultracapacitors in an ultracapacitor module can be connected in series. The ultracapacitors in an ultracapacitor module are preferably connected by busbars. To provide good thermal cooling, the busbars are preferably in conductive thermal contact (but not in electrical contact) with outer material of the housing in which the ultracapacitors are located.

Preferably a controller is provided, the controller being adapted for voltage monitoring and/or isolation fault detection.

The present invention also provides an energy storage system including a coupling system for the plurality of ultracapacitor modules according to any of the embodiments of the present invention.

### Brief Description of the figures

Fig. 1 illustrates an ultracapacitor energy storage system according to an embodiment of the present invention.
Fig. 2 illustrates a further ultracapacitor energy storage system according to an embodiment of the present invention.

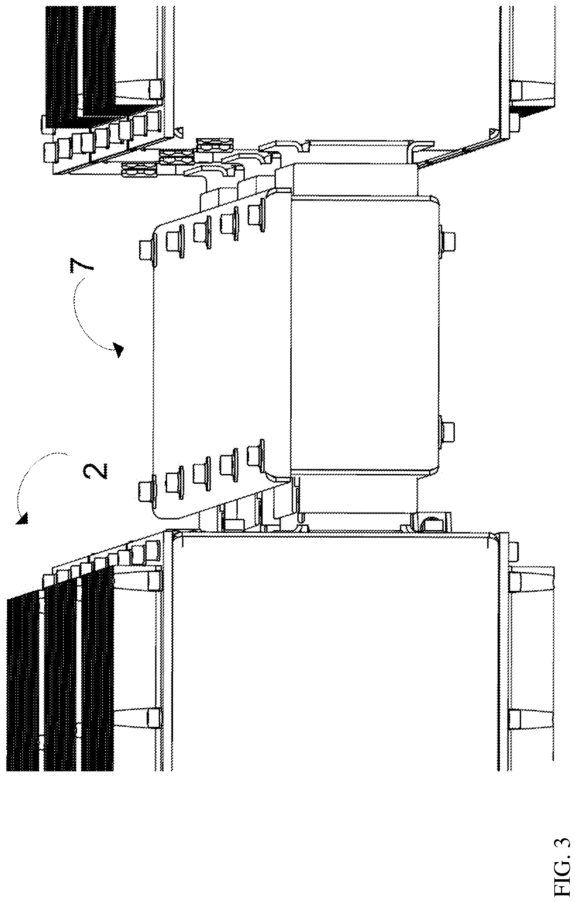

Fig. 3 illustrates a connection module according to an embodiment of the present invention.
Fig. 4 illustrates an ultracapacitor module according to an embodiment of the present invention.
Fig. 5 illustrates an assembly of ultracapacitors according to an embodiment of the present invention.
Fig. 6 shows a section through an ultracapacitor module according to an embodiment of the present invention.

### Description of the preferred embodiments

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

The present invention provides a pluggable high energy system that is suitable for most environments. Also the system is secure and safe in that meets security requirements. Such a system may find use in, for example, the automotive industry to provide a water-sealed, reinforced and vibration resistant system. The ability to release a lot of power in a short amount of time has its influence on security. Further additions to the system include safety precautions against isolation faults and short circuit current protection.

A water-sealed, reinforced and vibration resistant system in accordance with embodiments of the present invention may comprise an assembly of different ultracapacitor modules 2 as part of a coupling system to connector together the modules. A module may be protected to a degrees of impermeability of IP66, IP68 and IPX9-k, according to DIN EN 60529 und DIN 40 050 Teil 9. Such an ultracapacitor module **2** comprises a plurality of ultracapacitors. Embodiments of the present invention include both capacitors having the screw and/or welded type connections to the electrodes. These capacitors can be connected in series, in parallel or in a combination of series and parallel. The configuration depends on the required voltage and capacity and can be adapted to any level.

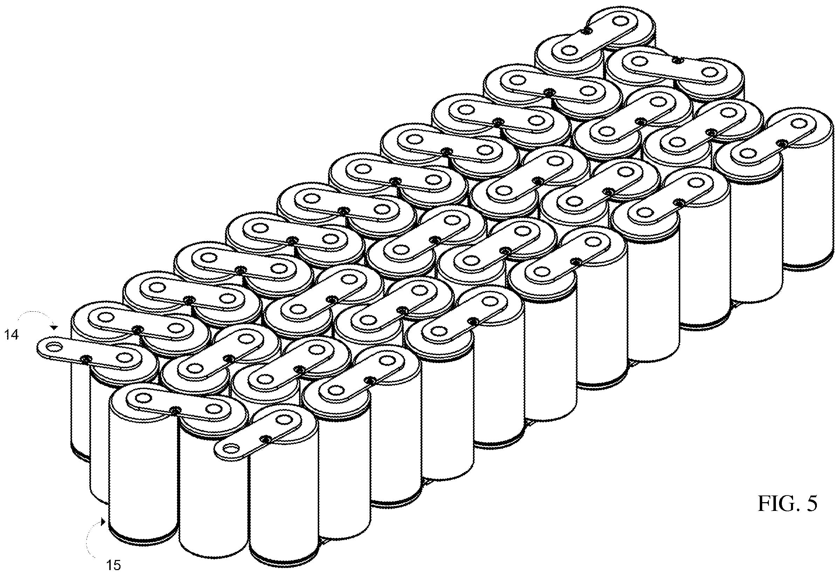

To save space the ultracapacitors **15** can be positioned in a close-packed triangle-form (e.g. FIG. **5**) in one embodiment, but a square-form (matrix) may also be used.

Connecting a plurality of at least one of the electrodes of the ultracapacitors **15** together is done by busbars **14**. The busbar material must be capable of good thermal conduction of heat (transcalent) as well as being electrically conductive, for example copper or aluminium or any of their alloys can be used. The shape of the busbar **14** can be an ellipse or a rectangle with the corners cut-off. This shape allow a large area of the section of the busbar **14** without allowing two busbars coming to close to each other. On busbar **14** a hole with a depth less than the height of the busbar can be foreseen to connect a wire. When quick connections are desired, a rivet can be used. Because of this hole, the top surface of busbar **14** stays flat. Bolting the wire to it can also be done. The purpose of this wire is to bring the voltages of each ultracapacitor **15** individually to an electronics unit such as a printed circuit board. Some of the functions these electronics can have are: balancing, overvoltage protection and a safety discharge until empty.

To keep the ultracapacitors **15** together, one or more plastic plates, preferably insulating plates with holes in can be used. An example of such a plastic material is polyacetal (POM), but other mechanically strong and temperature resistant materials are also possible. This way the combination of ultracapacitors **15,** busbars **14** and plastic plate form a stiff entity.

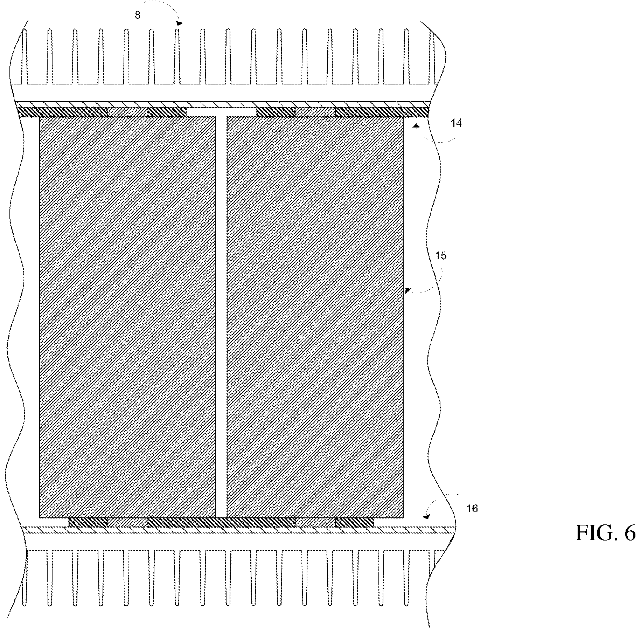

The capacitors are located in a housing, e.g. in the form of a box. The busbars **14** are positioned is such a way that they preferably come in thermal (but not electrical) contact, especially conductive thermal contact with the outer construction of the box, as shown for example in FIG. **6****.** This conductive thermal contact will allow conduction of the developed heat from the ultracapacitors directly to the outside of the module **2** with better cooling as a result. To electrically isolate the module, an electrical isolation and thermally conductive (transcalent) material **16** is preferably used between the busbars **14** and the modules outer material **8.**

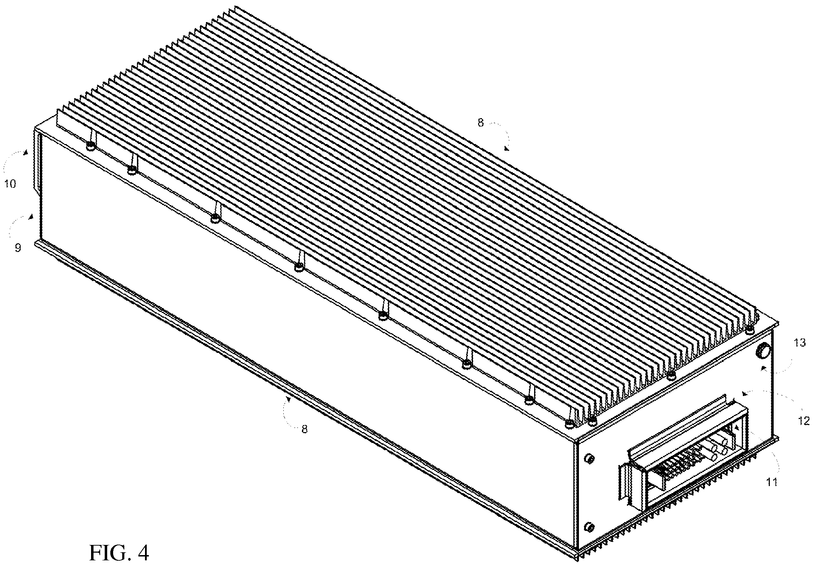

The outer side of the housing of an ultracapacitor module FIG. **4** is, for example a rectangular box comprising plates **9** which can be folded, welded together, screwed together or a combination of these. On the plates or integral with them are located heat sinks, e.g. finned heat sinks. The plates **9** can be generally rectangular and it is preferred if the upper and lower surfaces are larger than the side or end surfaces. This provides better heat conduction away from the capacitors in each module. The housing is water-sealed, e.g. by welding or by application of sealants. The material is preferably a metal such as aluminium or other low weight material. The plates **9** that are in thermal contact the busbar **14,** can in an alternative embodiment be replaced by heat sinks **8** to allow a better heat conduction to the environment.

One end of the box is equipped with a connector 11. This connector can include pins for power connection and for control signals such as temperature, voltage and control signals. A current loop can also be included. The system uses a connector 11 which can adjust its position itself when connecting to its counterpart. The "Combitac" of the company "Multi contact" is such a connector. On the opposite end of the box are handles 10. The reason to position the connector and handles on different sides of the module is to maximize the distance between the place where an individual touches the module (the handles) and the power connection (the connector). It creates a safer way of handling a charged module. Waterproof sealing around the connector 12 and between the different parts of the outer box ensures a water-tight entity. A pressure compensation element 13 provides an equal pressure inside and outside the module. This to compensate the pressure rising caused by a temperature changes (rising/falling) of the working ultracapacitor system. Pressure compensation elements serve for the aeration and de-aeration of components, especially of enclosures. This prevents damage to built-in components caused by condensation that occurs because of variations in temperature/pressure peaks. Such a pressure compensation element can allow a high air flow rate combined with high water retention capacity. The internal pressure of the closed housing is adapted to the ambient pressure, and at the same time, water penetration is prevented. A membrane can be integrated into the pressure compensation element, which is permeable to air on both sides and permeable to water from only the side towards the inner of the housing. This means that air is free to flow from inside the module to the outside or from the outside to the inside. Water can only flow from the inside to the outside. This way water in the module can be removed automatically. Hence the housing can have a pressure compensation element which is mounted nn the module for equalizing the pressure inside an outside while draining water to the outside.

In a less preferred embodiment an air chushion can be located in each water sealed module which assists in equalising the pressure.

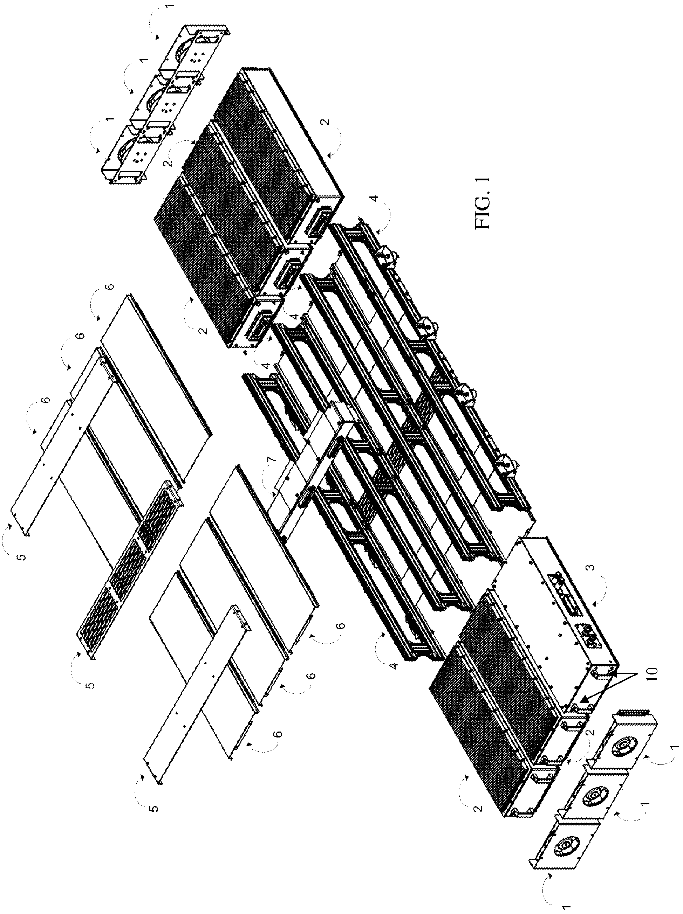

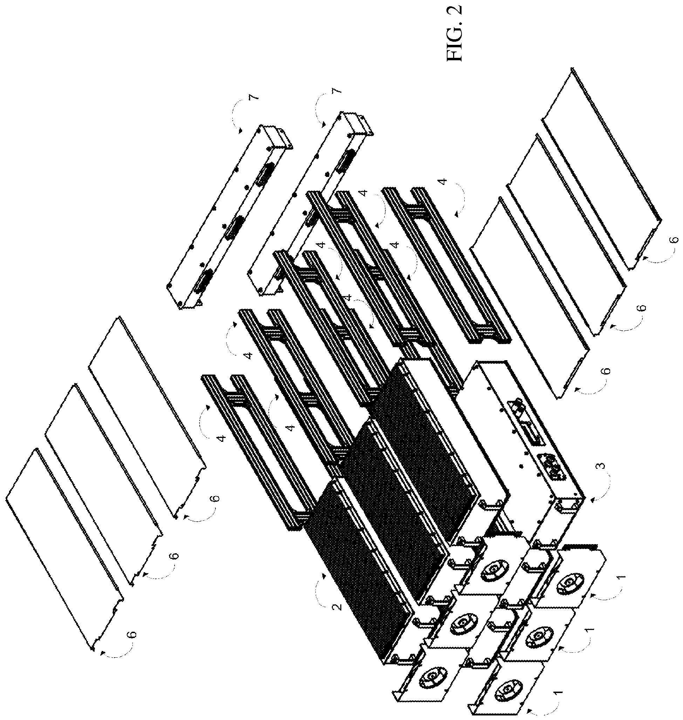

A water-sealed, reinforced and vibration resistant system according to embodiments of the present invention, e.g. as shown in FIG. 1 and FIG. 2 comprises an assembly of a plurality of ultracapacitor modules 2 in a coupling system that includes a connection module 7 to combine the different ultracapacitor modules and a frame 4 to keep the modules mechanically together. The frame 4 is adapted to hold and secure ultracapacitor modules 2 and at least one connection module 7. The use of a plurality of ultracapacitor modules 2 has the advantage that the weight of one module is still permissible to be carried by a single individual. The fact that the total voltage of the whole system is divided by a certain number, depending on the number of modules, provides that one module has a lower and thus safer voltage level.

Preferred embodiments of the present invention involve a pluggable system of these ultracapacitor modules 2, e.g. slidable into the frame 4 and pluggable into one or more connector modules 7. The fact that the modules 2 are pluggable has several advantages. One is easy installation and replacement of the modules. A second advantage is that taking one ultracapacitor module out of its frame will bring the total voltage to a lower level so that working on a loaded system will be safer. It also has the advantage of interrupting the high power loop. An open loop is again a safer situation.

Two or more ultracapacitor modules 2 can be slid into a frame 4. This in combination with the connection modules makes the system pluggable. The number of ultracapacitor modules 2 can be selected as desired and depends on the level of voltage and capacity that is required. FIG. 1 and FIG. 2 give an example. On the drawings the end of each module 2 with the connector 11 is slid in first and the end with the handles 10 is the outer side. Means for locating the modules 2 into guides such as rails on the frames 4, are provided e.g. one or more protrusions can be formed on the ultracapacitor modules 2 which engage with, and run in guides such as rails on the frames. In this way the means for locating, such as the protrusions, slide into a guide, e.g. a rail on frame 4. Other means for sliding include providing frame 4 with a means for locating such as protrusions and the ultracapacitor modules 2 carry the guide or rail. As examples, either or both protrusions and guides can be made of aluminium, Teflon (PTFE), erthalon or another easily slidable (low friction) material. A mechanical construction of guides is also possible, e.g. a rail system.

The frame 4 is preferably made of a metal such as aluminium or another mechanically strong material. It can comprise different profiles. The profiles are attached to each other by a first fastening system, e.g. a screw combined with corner connectors or they are welded. Onto these profiles, reinforcement-profiles 5 are attached. These give the frame 4 its stiff construction.

The ultracapacitor module 2 is connected to the frame with a second fastening system such as screws or a quick-connection system such as clips. The purpose is that it takes less effort for an individual to install the ultracapacitor modules 2 in the frame.

When installing the ultracapacitor modules 2, the connector 11 of these modules slides into its counterpart. All these counterparts are located on the connection module 7. The primary goal of connection module 7 is the connection of power and signals between the different ultracapacitor modules. These connections can be made with cables or with busbars. The signal connections can include a current loop to detect unplugged boxes, signals from the temperature elements and voltages. The power connections can be chosen to connect the ultracapacitor modules in series, in parallel or in a combination of both. The connection module 7 is used as a reinforcement of the structure of frame **4.**

When operated, the ultracapacitor modules **2** can produce heat. Passive cooling of the modules **2** is only acceptable at low current applications. When higher currents are required, e.g. hybrid vehicles, active cooling is preferable. Active cooling can be performed by fans and/or water cooling. The example systems in FIG. **1** and FIG. **2** use air cooling such as by fans **1.** The fans are attached to frame **4** or directly onto the ultracapacitor module **2.** Preferably the fans are located on the end of each module **2** that has the handles **10,** i.e. the end remote from the connection module **7.** Preferably the modules **2** are provided with heat sinks such as finned heat sinks on the upper and /or lower surfaces of each module **2.** These fans **1** blow an airflow over the heat sinks **8** of the ultracapacitor modules **2.** Above and/or below the module, air-guiding plates **6** are preferably present. These plates **6** can be slid into the frame **4** or can be mounted onto the ultracapacitor module **2.** They keep the airflow close to the heat sink **8,** e.g. mainly in between and around the fins of the heat sinks. Because of the limited space between the heat sink **8** and the plates **6,** the air is forced to flow between the fins of heat sink **8.** In the example system of FIG. **1** and FIG. **2****,** the fans **1** take in air from the outer side of the frame **4.** The out stream is located at the connection modules **7.**

To control and monitor the working of the ultracapacitor system, an electronic controller is provided. Relays or other switches can be used to switch the power connections on or off, both on the positive and negative cable. Additionally a pre-charge relay and pre-charge resistors can be provided. An electronic isolation detection system can be used to monitor the system for isolation faults. Temperature sensors can be provided to monitor the temperature on different places in the ultracapacitor modules **2**. A fuse can be used to protect against high currents. A current sensor can be provided for measuring the current flowing in the system. The voltage of the system can be measured using sensors at one or more places. One place is before the fuse and a second is after. This means that the working of the fuse can be measured by comparing the two voltages. Hardware is foreseen to control the fans **1** in speed. All the electronics can be placed in a different module **3** that slide into the frame like a ultracapacitor module. Another possibility is placing the electronics into the connection module **7.**

The system is designed to operate as a stand alone system, i.e. independently from an exterior system. However the possibility is foreseen that it can be controlled by an exterior system. The control messages can be sent over a CAN-bus for example.

Power connections from an exterior system can be made with cable lugs. The signal connections can be made with suitable connectors. The place where these connections enter the ultracapacitor system can be either the electronics module **3** or the connections module **7.**

A water-sealed, reinforced and vibration resistant system in accordance with embodiments of the present invention can be mounted on a vehicle such as an aircraft, a boat, an automobile, a bus , a truck, a milk float or any other electric vehicle to provide an electrical energy supply. For example it can be an emergency energy supply or it may be a primary energy supply for the vehicle. Alternatively, a water-sealed, reinforced and vibration resistant system in accordance with embodiments of the present invention can be mounted on a stationary electrically powered device.

## Claims

1. An assembly of ultracapacitor modules with a coupling system for a plurality of ultracapacitor modules (2), comprising:
a plurality of ultracapacitor modules (2), each module (2) comprising a plurality of ultracapacitors (15) in a housing,
a connection module (7) connecting together the plurality of ultracapacitor modules (2) with each other, and the connection module (7) including a connector (11) slid into a counterpart located on the ultracapacitor module (2) for connection of power and signals between the ultracapacitor modules (2),
a frame (4) to keep the ultracapacitor modules (2) and the connection module (7) mechanically together,
the ultracapacitor modules (2) being in plugged in connection with the connection module (7) and slidably inserted in the frame (4).

2. The assembly according to claim 1, wherein the connection module (7) includes electronics needed for the connection of power and signals between the ultracapacitor modules (2).

3. The assembly according to claim 1 or claim 2 comprising a heat sink (8) on the housing with means for airflow over the heat sink (8).

4. The assembly of claim 3, wherein an air-guiding plate (6) is provided on the side of the heat sink (8) remote from the housing.

5. The assembly of claim 3 or 4, wherein the air-guiding plate (6) is adapted for sliding into the frame (4) or is mounted onto an ultracapacitor module (2).

6. The assembly of any previous claim in which the ultracapacitors (15) in an ultracapacitor module (2) are connected in series.

7. The assembly of claim 6, wherein the ultracapacitors (15) in an ultracapacitor module are connected by busbars (14).

8. The assembly of claim 7, wherein the busbars (14) are in conductive thermal contact with outer material (9) of the housing in which the ultracapacitors (15) are located.

9. The assembly of any previous claim further comprising a controller, the controller being adapted for voltage monitoring and/or isolation fault detection.

10. The assembly of any previous claim further comprising a pressure compensation element (13) integrated into the housing for providing an equal pressure inside and outside each of the ultracapacitor modules (2).

11. An energy storage system including the assembly according to any of the previous claims.

## Patentansprüche

1. Anordnung von Ultrakondensatormodulen mit einem Kopplungssystem für eine Vielzahl von Ultrakondensatormodulen (2), umfassend:
eine Vielzahl von Ultrakondensatormodulen (2), wobei jedes Modul (2) eine Vielzahl von Ultrakondensatoren (15) in einem Gehäuse umfasst,
ein Verbindungsmodul (7), das die eine Vielzahl von Ultrakondensatoren (2) miteinander zusammenschließt, und wobei das Verbindungsmodul (7) einen Steckverbinder (11) umfasst, der zum Anschluss von Strom und Signalen zwischen den Ultrakondensatormodulen (2) in ein Gegenstück, das auf dem Ultrakondensatormodul (2) angeordnet ist, hineingeglitten ist,
einen Rahmen (4), um die Ultrakondensatormodule (2) und das Verbindungsmodul (7) mechanisch zusammenzuhalten,
wobei die Ultrakondensatormodule (2) in eingesteckter Verbindung mit dem Verbindungsmodul (7) und verschiebbar in dem Rahmen (4) eingesetzt sind.

2. Anordnung nach Anspruch 1, wobei das Verbindungsmodul (7) Elektronik umfasst, die für den Anschluss von Strom und Signalen zwischen den Ultrakondensatormodulen (2) erforderlich sind.

3. Anordnung nach Anspruch 1 oder 2, die einen Kühlkörper (8) mit Mitteln zur Luftströmung über den Kühlkörper (8) auf dem Gehäuse umfasst.

4. Anordnung nach Anspruch 3, wobei die Luftleitplatte (6) von dem Gehäuse entfernt auf der Seite des Kühlkörpers (8) bereitgestellt ist.

5. Anordnung nach Anspruch 3 oder 4, wobei die Luftleitplatte (6) dafür ausgelegt ist, in den Rahmen (4) zu gleiten, oder auf einem Ultrakondensatormodul (2) befestigt ist.

6. Anordnung nach einem der vorhergehenden Ansprüche, wobei die Ultrakondensatoren (15) in einem Ultrakondensatormodul (2) in Reihe geschaltet sind.

7. Anordnung nach Anspruch 6, wobei die Ultrakondensatoren (15) in einem Ultrakondensatormodul durch Stromschienen (14) verbunden sind.

8. Anordnung nach Anspruch 7, wobei die Stromschienen (14) in leitendem thermischen Kontakt mit dem Außenmaterial (9) des Gehäuses sind, in dem die Ultrakondensatoren (15) angeordnet sind.

9. Anordnung nach einem der vorhergehenden Ansprüche, die ferner eine Steuerung umfasst, wobei die Steuerung für Spannungsüberwachung und/oder Isolationsfehlererkennung ausgelegt ist.

10. Anordnung nach einem der vorhergehenden Ansprüche, die ferner ein Druckausgleichselement (13) umfasst, das zum Bereitstellen eines gleichmäßigen Drucks innerhalb und außerhalb von jedem der Ultrakondensatormodule (2) in dem Gehäuse eingebaut ist.

11. Energiespeichersystem, das die Anordnung nach einem der vorhergehenden Ansprüche umfasst.

## Revendications

1. Ensemble de modules de supercondensateurs avec un système de couplage pour une pluralité de modules de supercondensateurs (2), comprenant :
une pluralité de modules de supercondensateurs (2), chaque module (2) comprenant une pluralité de supercondensateurs (15) dans un logement,
un module de connexion (7) connectant ensemble la pluralité de modules de supercondensateurs (2) les uns avec les autres, et le module de connexion (7) incluant un connecteur (11) glissé dans une contrepartie située sur le module de supercondensateurs (2) pour la connexion de puissance et de signaux entre les modules de supercondensateurs (2),
un châssis (4) pour maintenir les modules de supercondensateurs (2) et le module de connexion (7) mécaniquement ensemble,
les modules de supercondensateurs (2) étant branchés en connexion avec le module de connexion (7) et insérés de manière coulissante dans le châssis (4).

2. Ensemble selon la revendication 1, dans lequel le module de connexion (7) inclut de l'électronique nécessaire pour la connexion de puissance et de signaux entre les modules de supercondensateurs (2).

3. Ensemble selon la revendication 1 ou la revendication 2 comprenant un puits de chaleur (8) sur le logement avec un moyen pour un flux d'air au-dessus du puits de chaleur (8).

4. Ensemble selon la revendication 3, dans lequel une plaque de guidage d'air (6) est prévue sur le côté du puits de chaleur (8) distant du logement.

5. Ensemble selon la revendication 3 ou 4, dans lequel la plaque de guidage d'air (6) est conçue pour coulisser dans le châssis (4) ou est montée sur un module de supercondensateurs (2).

6. Ensemble selon n'importe quelle revendication précédente, dans lequel les supercondensateurs (15) dans un module de supercondensateurs (2) sont reliés en série.

7. Ensemble selon la revendication 6, dans lequel les supercondensateurs (15) dans un module de supercondensateurs sont connectés par des barres bus (14).

8. Ensemble selon la revendication 7, dans lequel les barres bus (14) sont en contact thermique conducteur avec la matière extérieure (9) du logement dans lequel les supercondensateurs (15) sont situés.

9. Ensemble selon n'importe quelle revendication précédente comprenant en outre une unité de commande, l'unité de commande étant conçue pour du contrôle de tension et/ou de la détection de défaut d'isolement.

10. Ensemble selon n'importe quelle revendication précédente comprenant en outre un élément de compensation de pression (13) intégré dans le logement pour fournir une pression égale à l'intérieur et à l'extérieur de chacun des modules de supercondensateurs (2).

11. Système de stockage d'énergie incluant l'ensemble selon l'une quelconque des revendications précédentes.
